# EUROPEAN PATENT SPECIFICATION

(11) **EP 1 839 420 B1**
(45) Date of publication and mention of the grant of the patent: **04.04.2018**
(21) Application number: 05819786.4
(22) Date of filing: 22.12.2005
(51) Int. Cl.: H04L 29/06, H04L 29/08, H04W 4/02, H04W 4/18, H04W 4/20, H04W 64/00, H04W 76/00

(54) **A METHOD AND APPARATUS FOR HANDLING EMERGENCY CALLS**
VERFAHREN UND VORRICHTUNG ZUR ABWICKLUNG VON NOTRUFEN
PROCÉDÉ ET APPAREIL POUR LA GESTION D'APPELS D'URGENCE

(30) Priority: 19.01.2005 SE 0500165
(43) Date of publication of application: 03.10.2007
(73) Proprietor: Telefonaktiebolaget LM Ericsson (publ), 164 83 Stockholm (SE)
(72) Inventor: TERRILL, Stephen, E-28006 Madrid (ES); BUSIN, Åke, S-192 70 Sollentuna (SE); OLSSON, Magnus, S-112 38 Stockholm (SE)
(74) Representative: Zacco Sweden AB
(86) International application number: PCT/SE2005/002016
(87) International publication number: WO 2006/078202

(56) References cited:
- WO-A-03/009627
- WO-A1-2003/094563
- WO-A2-02/03718
- BERGER S ET AL: "Ubiquitous computing using SIP" PROCEEDINGS OF THE 13TH. INTERNATIONAL WORKSHOP ON NETWORK AND OPERATING SYSTEMS SUPPORT FOR DIGITAL AUDIO AND VIDEO. NOSSDAV 2003. MONTEREY, CA, JUNE 1 - 3, 2003, PROCEEDINGS OF THE INTERNATIONAL WORKSHOP ON NETWORK AND OPERATING SYSTEM SUPPORT FOR, 1 June 2003 (2003-06-01), pages 82-89, XP002340516 ISBN: 1-58113-694-3

## Description

### TECHNICAL FIELD

The present invention relates generally to a method and apparatus for handling emergency calls in a multimedia service network. In particular, the invention is concerned with obtaining required location information for a calling subscriber.

### BACKGROUND

In traditional circuit-switched telephony systems, emergency services are available for subscribers in situations of emergency, such as accidents and diseases. Emergency calls are typically first routed to an emergency centre which then connects the calls further to relevant emergency service stations, depending on the current situation, e.g. a hospital, a fire station or the police.

Details and requirements of emergency services are subject to regulations prevailing in different countries and regions. Typically, it is required that the telephony system can provide relevant location information in order to certify the location of the calling party. Firstly, it may be important to connect an incoming call to an emergency centre or service station being reasonably close to the caller. Secondly, the caller may not for some reason be able to provide crucial information regarding his/her whereabouts to the emergency centre, at least not immediately.

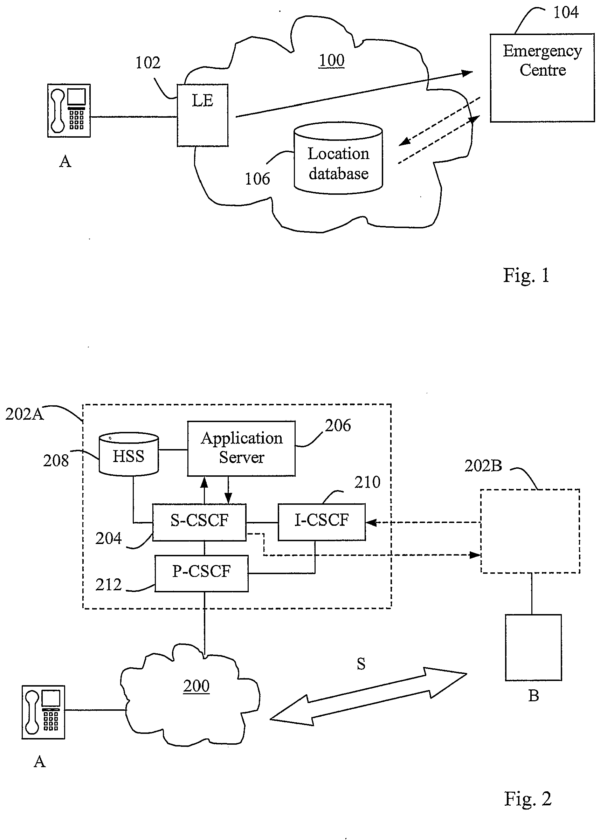

Fig. 1 illustrates a fixed subscriber terminal A connected to a telephony network 100 by means of a local exchange LE 102. An emergency centre 104 is also connected to the network 100, to which an emergency call is directed from subscriber A. Network 100 further comprises a location database 106 holding geographic location information on subscribers connected to the network 100, including subscriber A, e.g. in the form of local street addresses or the like.

It is typically required in fixed public networks that local exchanges therein ensures that a "calling party identifier" is included in emergency calls when routed to an emergency centre. In the present example, local exchange 102 has knowledge of subscriber terminal A being connected to a specific input line in the exchange, which is associated with a specific calling party identifier of subscriber terminal A. The local exchange 102 is thus required to supply the calling party identifier of subscriber terminal A when transmitting the emergency call to emergency centre 104. In location database 106, the geographic location of subscriber terminal A is stored together with its calling party identifier, such that the emergency centre 104 can retrieve that location information from the location database 106 by means of the calling party identifier received with the emergency call.

In a cellular network, a serving Mobile Switching Centre MSC can include location information in emergency calls from mobile terminals, such as a cell identification or even more accurate information in the form of geographic coordinates or the like based on location services employed in the network. Further, the receiving emergency centre may also use specific location services to determine the location of the calling party, if necessary.

Although the examples above are relevant for traditional circuit-switched telephone networks, various communication networks and terminals are used today that are capable of packet-based multimedia communication using IP (Internet Protocol), including fixed or mobile computers and telephones. Multimedia services typically entail IP based transmission of encoded data representing media in different formats and combinations, including audio, video, images, text, documents, animations, etc.

The location of a subscriber terminal is not permanent in the same way as before, since an IP terminal can be connected to multimedia service networks more or less regardless of its current geographic location, while still using the same subscriber identity. This is evidently the case for mobile terminals, but also for fixed portable terminals that can be jacked into different access points at different locations in an IP access network, e.g. for accessing various "broadband" services.

A network architecture called "IP Multimedia Subsystem" (IMS) has been developed by the 3^{rd} Generation Partnership Project (3GPP) as an open standard for handling multimedia services and communication sessions in the packet domain. IMS networks can also be used to provide emergency services, although it is not evident how to provide relevant location information when required, due to the roaming possibilities for IP terminals, and this issue has not yet been solved. IMS is a platform for enabling services based on IP transport more or less independent of the access technology used, and will be briefly outlined here.

The IMS network is thus used for generally controlling multimedia sessions, and a specification called "SIP" (Session Initiation Protocol, according to the standard IETF RFC 3261) is used for handling multimedia sessions in IMS networks. SIP is an application-layer protocol used by IMS networks and terminals to establish and control IP based multimedia communications. When sending SIP messages, an addressing element called "SIP URI" (Uniform Resource Identifier) is used, such that one SIP URI indicates the source and another one indicates the destination in each message.

Fig. 2 is an exemplary schematic illustration of a basic scenario when multimedia services are provided for a terminal A by means of an IMS service network. Terminal A is connected to an IP access network 200 and communicates media with a remote party B, such as another terminal or server, in a communication session S. An IMS network 202A is connected to the IP access network 200 and handles the session with respect to terminal A, where networks 200 and 202 are typically owned by the same operator. Moreover, if a terminal is connected to a visited access network, multimedia services are handled by the terminal's "home" IMS network, i.e. where it is registered as a subscriber. The remote party B may be connected to another corresponding IMS network 202B.

The illustrated session S is basically managed by a node called S-CSCF (Serving Call Session Control Function) 204 assigned to terminal A in the IMS network 202A, and the used multimedia service is enabled and executed by an application server 206 connected to the IMS network 202. Basically, the S-CSCF node 204 serves as a proxy for the application server 206 towards terminal A, and sends SIP messages coming from terminal A towards the remote party B, as indicated by a dashed arrow. Further, a main database element HSS (Home Subscriber Server) 208 stores subscriber and authentication data as well as service information, among other things, that the SIP application server 206 can fetch for executing services for subscribers.

A node called I-CSCF (Interrogating Call Session Control Function) 210 in IMS network 202 is connected to other IMS networks, including network 202B, and acts as a gateway for SIP messages arriving from such IMS networks. I-CSCF 210 receives SIP messages concerning the remote party B, as indicated by another dashed arrow. Another node in IMS network 202 called P-CSCF (Proxy Call Session Control Function) 212 acts as an entry point towards the IMS network 204 from any access network, such as IP network 200, and all signalling flows between subscribers of the IMS network 204 are routed through the P-CSCF 212. Of course, the IMS network 202 contains numerous other nodes and functions, such as further S-CSCF nodes and SIP application servers, which are not shown here for the sake of simplicity.

As indicated above, it has not been solved how to satisfy prevailing emergency requirements for providing location information in emergency calls from IP terminals in a safe and reliable manner, when an IP based multimedia service network is used. In particular, it is desirable to supply location information when an emergency call, coming from an IP terminal that can be moved between different locations, is routed to an emergency centre. It is also desirable to select a suitable emergency centre to which the emergency call is to be routed, depending on the location of the calling subscriber.

WO 02/03718 A2 describes an IP based packet switched wireless communications network in which an emergency telephone call is supported and routed to a Public Safety Answering Point (PSAP). An activate PDP context request is sent from a user equipment to the network. A parameter in said activate PDP context request indicates that the PDP context will be used to transfer an emergency call. An activate PDP context accept message is returned from said support node to said user equipment. Said activate PDP context accept message acknowledges said activate PDP context request message and provides the address of a call state control function. A call setup request transferred to the call state control function includes the Service Area Identity (SAI). The call state control function selects a PSAP based, at least in part, on the SAI included in the call setup request and forwards the emergency call to the selected PSAP.

### SUMMARY

The object of the present invention is to address at least some of the problems outlined above, and to provide a solution for enabling the supply of location information for a subscriber to an emergency centre in connection with an emergency call, when connected to an IP access network. This object and others may be obtained by providing a method and apparatus according to the attached independent claims.

According to one aspect, the present invention provides a method, executed in a multimedia service network, of obtaining location information for subscribers connected to an IP access network. When a request is received from a subscriber containing an IP address currently assigned to the subscriber, a location query including said IP address is sent to the IP access network. Location information for the subscriber is then received therefrom in response to the location query, thereby enabling supply of the received location information in connection with an emergency call from said subscriber.

If it is determined that the received request relates to an emergency call, the obtained location information is added to the request before sending it to an emergency centre. The emergency centre may be selected for the request based on the obtained location information. The multimedia service network may be an IMS network using SIP signalling, and the request relating to an emergency call is then typically an SIP INVITE message.

On the other hand, if it is determined that the received request is a registration request, the obtained location information may be saved for later retrieval in the case of a subsequent emergency call from the subscriber. If the multimedia service network is an IMS network using SIP signalling, the registration request is typically an SIP REGISTER message.

When the multimedia service network is an IMS network, the method can be executed in an IMS core entity such as a P-CSCF node in the IMS network. The location query above may be sent to a location retrieval unit in the IP access network, which may also be referred to as a Location Query Function.

According to another aspect, the present invention provides an arrangement in a multimedia service network, for obtaining location information for subscribers connected to an IP access network. The inventive arrangement comprises means for receiving a request from a subscriber containing an IP address currently assigned to the subscriber, means for sending a location query including said IP address to the IP access network, and means for receiving location information for the subscriber in response to the location query. Thereby, the received location information can be supplied in connection with an emergency call from said subscriber.

The multimedia service network arrangement may further comprise logic means for determining whether the received request relates to an emergency call, and means for adding the obtained location information to the request before sending it to an emergency centre. The logic means may be configured to select the emergency centre for the request based on the obtained location information. If the multimedia service network is an IMS network using SIP signalling, the request relating to an emergency call may be an SIP INVITE message.

The multimedia service network arrangement may further comprise logic means for determining whether the received request is a registration request, and means for storing the obtained location information for later retrieval in the case of a subsequent emergency call from the subscriber. If the multimedia service network is an IMS network using SIP signalling, the registration request is typically an SIP REGISTER message.

When the multimedia service network is an IMS network, the arrangement can be implemented in an IMS core entity such as a P-CSCF node in the IMS network. The sending means may be configured to send the location query to a location retrieval unit in the IP access network, which may also be referred to as a Location Query Function.

According to yet another aspect, the present invention provides a method, executed in an IP access network, of providing location information to a multimedia service network for subscribers connected to said IP access network. When a location query is received for a subscriber containing an IP address currently assigned to the subscriber, location information for the subscriber is retrieved based on said IP address, and the retrieved location information for the subscriber is provided to said multimedia service network in response to the received location query.

A location retrieval unit in the IP access network, which may also be referred to as a Location Query Function, may retrieve a point of access identity currently associated with the received IP address, from an IP address administrator in the IP access network. The location retrieval unit may further retrieve the location information based on the retrieved point of access identity, from a location database in the IP access network. The location information may be given together with the retrieved point of access identity. The point of access identity may be a layer 2 address, such as an Ethernet MAC address, ATM VPI/VCI or other relevant network address, depending on the network configuration. If the multimedia service network is an IMS network, the retrieved location information may be provided to an IMS core entity such as a P-CSCF node in the IMS network.

According to yet another aspect, the present invention provides a location retrieval unit in an IP access network, which may also be referred to as a Location Query Function, for providing location information to a multimedia service network for subscribers connected to the IP access network. The inventive location retrieval unit comprises means for receiving a location query for the subscriber containing an IP address assigned to the subscriber, means for retrieving location information for the subscriber based on said IP address, and means for providing the retrieved location information for the subscriber to the multimedia service network in response to the received location query.

The retrieving means may be configured to retrieve a point of access identity currently associated with the received IP address, from an IP address administrator in the IP access network. The retrieving means may be further configured to retrieve the location information based on the retrieved point of access identity, from a location database in the IP access network. The retrieving means may be further configured to obtain said location information together with the retrieved point of access identity.

The point of access identity may be a layer 2 address, such as an Ethernet MAC address, ATM VPI/VCI or other relevant network address, depending on the network configuration. If the multimedia service network is an IMS network, the providing means may be configured to provide the retrieved location information to an IMS core entity such as a P-CSCF node in the IMS network.

### BRIEF DESCRIPTION OF THE DRAWINGS

The present invention will now be described in more detail and with reference to the accompanying drawings, in which:
- Fig. 1 is a schematic block diagram of a communication network providing location information for an emergency call, according to the prior art.
- Fig. 2 is a schematic block diagram including an IMS network, in which the present invention can be used.
- Fig. 3 is a block diagram of an IP access network and a multimedia service network, illustrating a procedure for obtaining location information, according to one embodiment.
- Fig. 4 is a flow chart illustrating a procedure for obtaining location information, according to another embodiment.
- Fig. 5 is a flow chart illustrating a procedure for providing location information, according to yet another embodiment.
- Fig. 6 is a block diagram of an IMS core entity in a multimedia service network, according to yet another embodiment.
- Fig. 7 is a block diagram of a location retrieval unit in an IP access network, according to yet another embodiment.

### DESCRIPTION OF PREFERRED EMBODIMENTS

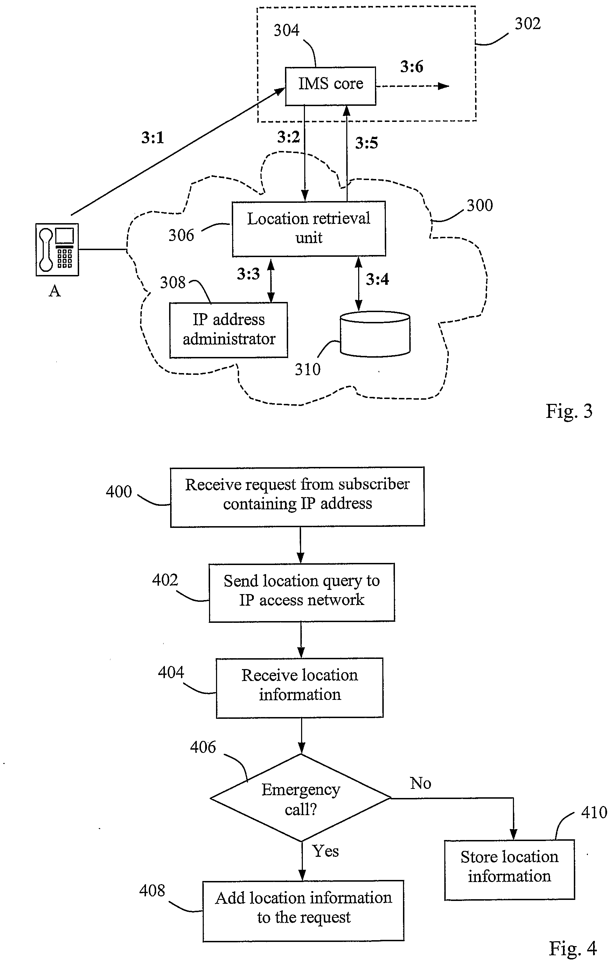

The present invention provides a solution for obtaining location information for a subscriber connected to an IP access network, in order to enable supply of the location information to an emergency centre in connection with an emergency call from said subscriber. Different embodiments of this solution will now be described, initially with reference to Fig. 3.

A subscriber A, operating a fixed terminal capable of IP communication, is connected to an IP access network 300 at a certain point of access. Access network 300 is further connected to a multimedia service network 302, in this case an IMS network like the one described above for Fig. 2, in which only an IMS core 304 is illustrated here. Here, the IMS core 304 is an entity basically representing a session managing node used for handling messages from subscriber A, preferably a P-CSCF node. The IP access network 300 may be configured for so-called fixed broadband access typically used for multimedia services, although the present invention is generally not limited in this respect.

Hence, subscriber A has access to multimedia services offered by means of multimedia network 302, such as various emergency services. The IP access network 300 comprises a location retrieval unit 306, an IP address administrator 308 and a location database 310, where the latter two nodes or similar may typically occur in any IP access network. The location retrieval unit 306 is also sometimes referred to as a "Location query function". The IP address administrator 308 assigns IP addresses to subscriber terminals for a limited time period upon request, e.g. when powered-on, and has knowledge of at which point of access in the network an IP address is currently used.

Each point of access in the network 300 may be identified by means of a layer 2 address such as an Ethernet MAC (Medium Access Control) address, ATM VPI/VCI (Asynchronous Transfer Mode, Virtual Path Identifier/Virtual Channel Identifier) or other relevant network address, depending on the network configuration. The location database 310 stores information on the physical location for each point of access in the network 300, such as a street address, geographic coordinates or the like.

As mentioned above, it is generally possible for subscribers to connect at different points of access in the IP access network 300, and it is therefore naturally not evident at which physical location the subscriber A is currently connected. For example, the subscriber may basically bring his/her IP communication terminal to any point of access in the network, e.g. to public sites such as hotels and airports, or to more private quarters. In addition, a subscriber may have different IP addresses at different occasions, which is administrated by the IP address administrator 308.

A first **step 3:1** in the figure illustrates that the IMS core 304 in network 300 receives a multimedia request from subscriber A, being at a location unknown so far. According to prevailing standards, the request contains an IP address currently assigned to the subscriber, and the request may be a session invitation such as an SIP INVITE message. Since the present solution is concerned with emergency calls, the received request may primarily be a session invitation for an emergency call that should be routed to a suitable emergency centre. However, the request may alternatively be a regular registration request that is typically sent to a multimedia service network after an IP terminal has been powered-on, without requesting a session. In IMS systems where SIP signalling is used, this would typically be a message called SIP REGISTER.

It is assumed here that location information on the calling party is required in emergency calls, which should be supplied to the emergency centre together with incoming emergency requests, as explained in the background section. Thus, in the case of an emergency request in step 3:1, the IMS network 302 is obliged to retrieve and add such location information to the request when transmitting it further to the emergency centre. In the case of a registration request, however, the IMS network 302 may retrieve and store the location information in order to supply it at a later occasion, if a subsequent emergency request should arise from the same subscriber. However, it should be noted that for some access networks the latter case is mainly relevant if mobility is not permitted or possible or expected, so that the subscriber's location (most likely) remains the same throughout a session. Otherwise, the emergency centre may request for updated location information, which however lies outside the scope of the present invention.

In a next **step 3:2,** IMS core 304 sends a location query including the IP address received in the request, to the location retrieval unit 306 in network 300, effectively asking for the location of the subscriber currently using the given IP address. In response thereto, unit 306 retrieves the identity of the point of access at which the subscriber currently using the IP address is connected, from the IP address administrator 308, in a **step 3:3.** Unit 306 may receive the point of access identity as a layer 2 address or other network address, depending on the network configuration, as mentioned above.

Having obtained the point of access identity, unit 306 can now retrieve the physical location for that point of access identity from location database 310, e.g. as a street address or similar or geographical coordinates, in a further **step 3:4.** Alternatively, the physical location may already be given from the IP address administrator in step 3:3, thereby making step 3:4 superfluous. In either case, the location retrieval unit 306 is now able to respond to the location query of step 3:2 by providing the obtained location information to IMS core 304, in a following **step 3:5.**

Thereby, IMS core 304 is able to add the received location information to the request of step 3:1 from subscriber A, if required, and send it further to an emergency centre as indicated by a final optional **step 3:6.** Alternatively, if the request of step 3:1 was a registration request and not an emergency request, IMS core 304 may just store the location information for later use in the case of an emergency request from subscriber A, as mentioned above, naturally without adding it to the registration request.

The above described solution makes it possible to obtain and supply required location information in connection with emergency calls over a multimedia service network coming from subscribers connected to an IP access network.

A procedure for obtaining location information for a subscriber connected to an IP access network, according to one aspect of the present invention, will now be described with reference to the flow chart in Fig. 4. The steps in the flow chart are defined for execution in a multimedia service network, particularly in an IMS core entity such as a P-CSCF node.

In a first **step 400,** a multimedia request is initially received from the subscriber containing an IP address currently assigned to the subscriber. In response thereto, a location query for the received IP address is sent in a next **step 402** to the IP access network, preferably to a location retrieval unit or similar therein, like the unit 306 shown in Fig. 3. After proceedings in the IP access network that will be outlined in more detail below, relevant location information is received therefrom, in following **step 404.**

Next, it is determined in a **step 406** whether the received request relates to an emergency call, i.e. directed to an emergency service that is requested in a session invitation for an emergency call from the subscriber. If so, the location information received in step 404 is added to the emergency call request in a further **step 408** before sending the request to an emergency centre. It should be noted that the obtained location information may be used for selecting a suitable emergency centre, e.g. located in the same region as the subscriber's current location. If it is determined in step 406 that the received request is not related to an emergency call, such as in the case of a registration request, the obtained location information is stored in a final illustrated **step 410** for later use if the subscriber should make an emergency call, instead of adding it to the request received in step 400.

Alternatively, this procedure may be simplified by executing the determination step 406 directly after the first step 400 of receiving the request. Then, only if the request is related to an emergency call, the location information may be obtained and supplied by executing steps 402, 404 and 408, and the storing step 410 may be omitted. In this alternative, no further steps are taken for location retrieval if the request is not related to an emergency call.

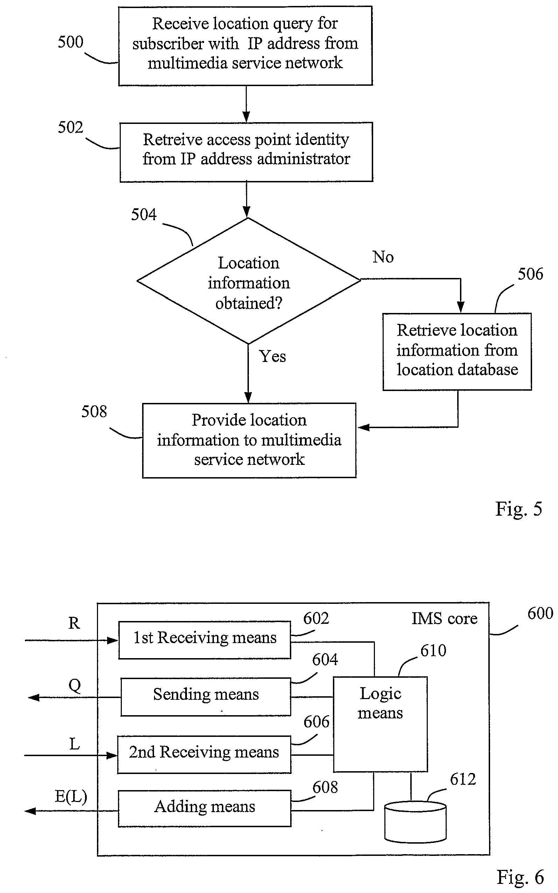

A procedure according to another aspect of the present invention, for providing location information to a multimedia service network for a subscriber connected to an IP access network, will now be described with reference to the flow chart in Fig. 5. The steps in the flow chart are defined for execution in the IP access network, particularly in a location retrieval unit or the like implemented therein, sometimes also referred to as a "Location Query Function". As in the previous examples, the multimedia service network may be an IMS network and its point of communication in the procedure below would then be an IMS core entity such as a P-CSCF node.

In a first **step 500,** a location query is received from the multimedia service network for the subscriber, containing an IP address currently assigned to the subscriber. In response thereto, a point of access identity (e.g. a layer 2 address) corresponding to the given IP address is retrieved from an IP address administrator in a next **step 502.** Depending on the access technology used, the required location information may be given at this point. Thus, it is checked in a next **step 504** whether the location information has been obtained, and if not, the location information is retrieved from a location database based on the point of access identity retrieved above (e.g. layer 2 address) in a following **step 506.**

Eventually, the location information can be provided to the multimedia service network in a final **step 508.** On the other hand, if it was determined in step 504 above that the required location information has already been obtained, step 508 can be executed immediately after step 504, as indicated.

An arrangement in an IMS core entity in a multimedia service network, e.g. a P-CSCF node, will now be briefly described with reference to Fig. 6. The IMS core entity 600 is basically adapted to execute the procedure illustrated in Fig. 4. The IMS core entity 600 comprises first receiving means 602 configured to receive multimedia requests R from subscribers, and sending means 604 configured to send location queries Q to an IP access network where said subscribers are connected. IMS core entity 600 further comprises second receiving means 606 configured to receive location information L from the IP access network in response to said queries Q, and adding means 608 configured to add obtained location information L before sending emergency requests E(L) to an emergency centre.

The IMS core entity 600 may further comprise a logic means 610 for controlling the operation of the different means 602-608, and optionally also for selecting a suitable emergency centre for the emergency requests E(L), based on obtained location information. The logic means 610 may also be configured to recognise whether an incoming multimedia request is directed to an emergency service, and to determine if location information is to be added to the request or not. Finally, IMS core entity 600 may also comprise storing means 612 configured to store received location information L for later retrieval in the case of subsequent emergency requests.

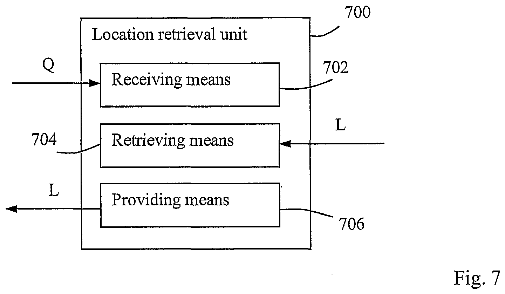

An arrangement in an IP access network for providing location information to a multimedia service network for a subscriber connected to the IP access network, will now be briefly described with reference to Fig. 7. In this example, the arrangement is implemented in a location retrieval unit 700, similar to the unit 306 in Fig. 3, basically adapted to execute the procedure illustrated in Fig. 5.

The location retrieval unit 700 comprises receiving means 702 configured to receive location queries Q from a multimedia service network, each query containing an IP address assigned to a subscriber. Unit 700 further comprises retrieving means 704 configured to retrieve location information L based on said IP addresses, from an IP address administrator and optionally a location database in the IP access network. Unit 700 further comprises providing means 706 configured to provide retrieved location information L for subscribers to the multimedia service network in response to received location queries Q.

It should be noted that Fig's 6 and 7 illustrate logically the basic functional elements of the IMS core entity 600 and the location retrieval unit 700, respectively. However, the skilled person is free to put them into practice in any suitable manner not limited to the shown dispositions.

The present invention, as described with reference to different embodiments above, offers a simple yet reliable mechanism for obtaining required location information and for providing it to an emergency centre, in response to emergency requests from subscribers connected to an IP access network and requesting emergency services from a multimedia service network.

While the invention has been described with reference to specific exemplary embodiments, the description is in general only intended to illustrate the inventive concept and should not be taken as limiting the scope of the invention. For example, the SIP signalling protocol and IMS concept have been used throughout when describing the above embodiments, although any other standards and service networks for enabling multimedia communication may basically be used. Further, the invention is not limited to any particular emergency services but may be used for providing location information to any type of emergency request. The present invention is defined by the appended claims.

## Claims

1. A method, executed in a multimedia service network (302), of obtaining location information for subscribers connected to an IP access network (300), comprising the following steps:
- receiving a request from a subscriber containing an IP address currently assigned to the subscriber,
- sending a location query including said IP address to the IP access network (300), and
- receiving location information for the subscriber in response to the location query, **characterized in that** said location information comprises the physical location of the point of access in the IP access network (300) at which said subscriber currently using said IP address is connected to said IP access network (300), thereby enabling supply of the received location information in connection with an emergency call from said subscriber.

2. A method according to claim 1, wherein it is determined that the received request relates to an emergency call, and the obtained location information is added to the request before sending it to an emergency centre.

3. A method according to claim 2, wherein said emergency centre is selected for the request, based on the obtained location information.

4. A method according to claim 2 or 3, wherein the multimedia service network (302) is an IMS network using SIP signalling, and said request relating to an emergency call is an SIP INVITE message.

5. A method according to claim 1, wherein it is determined that the received request is a registration request, and the obtained location information is saved for later retrieval in the case of a subsequent emergency call from said subscriber.

6. A method according to claim 5, wherein the multimedia service network (302) is an IMS network using SIP signalling, and said registration request is an SIP REGISTER message.

7. A method according to any of claims 6, wherein the multimedia service network (302) is an IMS network, the method being executed in an IMS core entity (304).

8. A method according to any of claims 7, wherein the location query is sent to a location retrieval unit (306) in the IP access network (300).

9. An arrangement in a multimedia service network (302), for obtaining location information for subscribers connected to an IP access network (300), comprising:
- means for receiving a request from a subscriber containing an IP address currently assigned to the subscriber,
- means for sending a location query including said IP address to the IP access network (300), and
- means for receiving location information for the subscriber in response to the location query, **characterized in that** said location information comprises the physical location of the point of access in the IP access network (300) at which said subscriber currently using said IP address is connected to said IP access network (300), thereby enabling supply of the received location information in connection with an emergency call from said subscriber.

10. An arrangement according to claim 9 further comprising logic means for determining whether the received request relates to an emergency call, and means for adding the obtained location information to the request before sending it to an emergency centre.

11. An arrangement according to claim 10, wherein the logic means is configured to select said emergency centre for the request, based on the obtained location information.

12. An arrangement according to claim 10 or 11, wherein the multimedia service network (302) is an IMS network using SIP signalling, and said request relating to an emergency call is an SIP INVITE message.

13. An arrangement according to claim 9, further comprising logic means for determining whether the received request is a registration request, and means for storing the obtained location information for later retrieval in the case of a subsequent emergency call from said subscriber.

14. An arrangement according to claim 13, wherein the multimedia service network (302) is an IMS network using SIP signalling, and said registration request is an SIP REGISTER message.

15. An arrangement according to any of claims 9-14, wherein the multimedia service network (302) is an IMS network, the arrangement being implemented in an IMS core entity (304).

16. An arrangement according to any of claims 9-15, wherein said sending means is configured to send the location query to a location retrieval unit (306) in the IP access network (300) .

17. A method, executed in an IP access network (300), of providing location information to a multimedia service network (302) for subscribers connected to said IP access network (300), comprising the following step:
- receiving a location query for a subscriber containing an IP address currently assigned to the subscriber, and
- retrieving location information for the subscriber based on said IP address, **characterized in that** said location information comprises the physical location of the point of access in the IP access network (300) at which said subscriber currently using said IP address is connected to said IP access network (300), and
- providing the retrieved location information for the subscriber to said multimedia service network (302) in response to the received location query.

18. A method according to claim 17, wherein a location retrieval unit in the IP access network retrieves a point of access identity currently associated with the received IP address, from an IP address administrator in the IP access network.

19. A method according to claim 18, wherein the location retrieval unit further retrieves said location information based on the retrieved point of access identity, from a location database in the IP access network.

20. A method according to claim 19, wherein said location information is given together with the retrieved point of access identity.

21. A method according to any of claims 18-20, wherein the point of access identity is a layer 2 address, such as an Ethernet MAC address, ATM VPI/VCI or other relevant network address, depending on the network configuration.

22. A method according to any of claims 17-21, wherein the multimedia service network (302) is an IMS network and the retrieved location information is provided to an IMS core entity (304).

23. A location retrieval unit (306) in an IP access network (300) for providing location information to a multimedia service network (302) for subscribers connected to said IP access network (300), comprising:
- means for receiving a location query for said subscriber containing an IP address assigned to the subscriber, and
- means for retrieving location information for the subscriber based on said IP address, **characterized in that** said location information comprises the physical location of the point of access in the IP access network (300) at which said subscriber currently using said IP address is connected to said IP access network (300), and
- means for providing the retrieved location information for the subscriber to said multimedia service network (302) in response to the received location query.

24. A location retrieval unit according to claim 23, wherein the retrieving means is configured to retrieve a point of access identity currently associated with the received IP address, from an IP address administrator in the IP access network.

25. A location retrieval unit according to claim 24, wherein the retrieving means is further configured to retrieve said location information based on the retrieved point of access identity, from a location database in the IP access network.

26. A location retrieval unit (306) according to claim 24, wherein the retrieving means is further configured to obtain said location information together with the retrieved point of access identity.

27. A location retrieval unit (306) according to any of claims 24-26, wherein the point of access identity is a layer 2 address, such as an Ethernet MAC address, ATM VPI/VCI or other relevant network address, depending on the network configuration.

28. A location retrieval unit (306) according to any of claims 23-27, wherein the multimedia service network (302) is an IMS network and the providing means is configured to provide the retrieved location information to an IMS core entity (304).

## Patentansprüche

1. Verfahren, ausgeführt in einem Multimedia-Dienstnetz (302) zum Erlangen von Standortinformationen für Teilnehmer, die mit einem IP-Zugangsnetz (300) verbunden sind, umfassend die folgenden Schritte:
- Empfangen einer Aufforderung von einem Teilnehmer, die eine IP-Adresse enthält, die dem Teilnehmer gegenwärtig zugewiesen ist,
- Senden einer Standortanfrage, beinhaltend die IP-Adresse, an das IP-Zugangsnetz (300), und
- Empfangen von Standortinformationen für den Teilnehmer als Antwort auf die Standortanfrage, **dadurch gekennzeichnet, dass** die Standortinformationen den physischen Standort des Zugangspunkts in dem IP-Zugangsnetz (300) umfassen, an dem der Teilnehmer gegenwärtig unter Verwendung der IP-Adresse mit dem IP-Zugangsnetz (300) verbunden ist, wodurch eine Lieferung der empfangenen Standortinformationen in Verbindung mit einem Notruf von dem Teilnehmer ermöglicht wird.

2. Verfahren nach Anspruch 1, wobei bestimmt wird, dass sich die empfangene Aufforderung auf einen Notruf bezieht, und die erlangten Standortinformationen der Aufforderung hinzugefügt werden, bevor diese an eine Notrufzentrale gesendet wird.

3. Verfahren nach Anspruch 2, wobei die Notrufzentrale basierend auf den erlangten Standortinformationen für die Aufforderung ausgewählt wird.

4. Verfahren nach Anspruch 2 oder 3, wobei das Multimedia-Dienstnetz (302) ein IMS-Netz unter Verwendung von SIP-Signalisierung ist und die Aufforderung, die sich auf einen Notruf bezieht, eine SIP-INVITE-Nachricht ist.

5. Verfahren nach Anspruch 1, wobei bestimmt wird, dass die empfangene Aufforderung eine Registrierungsaufforderung ist, und die erlangten Standortinformationen zum späteren Abruf im Fall eines nachfolgenden Notrufs von dem Teilnehmer gespeichert werden.

6. Verfahren nach Anspruch 5, wobei das Multimedia-Dienstnetz (302) ein IMS-Netz unter Verwendung von SIP-Signalisierung ist und die Registrierungsaufforderung eine SIP-REGISTER-Nachricht ist.

7. Verfahren nach einem der Ansprüche 6, wobei das Multimedia-Dienstnetz (302) ein IMS-Netz ist, wobei das Verfahren in einer IMS-Kerneinheit (304) ausgeführt wird.

8. Verfahren nach einem der Ansprüche 7, wobei die Standortanfrage an eine Standortabrufeinheit (306) in dem IP-Zugangsnetz (300) gesendet wird.

9. Anordnung in einem Multimedia-Dienstnetz (302) zum Erlangen von Standortinformationen für Teilnehmer, die mit einem IP-Zugangsnetz (300) verbunden sind, umfassend:
- Mittel zum Empfangen einer Aufforderung von einem Teilnehmer, die eine IP-Adresse enthält, die dem Teilnehmer gegenwärtig zugewiesen ist,
- Mittel zum Senden einer Standortanfrage, beinhaltend die IP-Adresse, an das IP-Zugangsnetz IP (300), und
- Mittel zum Empfangen von Standortinformationen für den Teilnehmer als Antwort auf die Standortanfrage, **dadurch gekennzeichnet, dass** die Standortinformationen den physischen Standort des Zugangspunkts in dem IP-Zugangsnetz (300) umfassen, an dem der Teilnehmer gegenwärtig unter Verwendung der IP-Adresse mit dem IP-Zugangsnetz (300) verbunden ist, wodurch eine Bereitstellung der empfangenen Standortinformationen in Verbindung mit einem Notruf von dem Teilnehmer ermöglicht wird.

10. Anordnung nach Anspruch 9, ferner umfassend ein logisches Mittel zum Bestimmen, ob sich die empfangene Aufforderung auf einen Notruf bezieht, und ein Mittel zum Hinzufügen der erlangten Standortinformationen zu der Aufforderung, bevor diese an eine Notrufzentrale gesendet wird.

11. Anordnung nach Anspruch 10, wobei das logische Mittel dazu konfiguriert ist, die Notrufzentrale für die Aufforderung basierend auf den erlangten Standortinformationen auszuwählen.

12. Anordnung nach Anspruch 10 oder 11, wobei das Multimedia-Dienstnetz (302) ein IMS-Netz unter Verwendung von SIP-Signalisierung ist und die Aufforderung, die sich auf einen Notruf bezieht, eine SIP-INVITE-Nachricht ist.

13. Anordnung nach Anspruch 9, ferner umfassend ein logisches Mittel zum Bestimmen, ob die empfangene Aufforderung eine Registrierungsaufforderung ist, und ein Mittel zum Speichern der erlangten Standortinformationen zum späteren Abruf in dem Fall eines nachfolgenden Notrufs von dem Teilnehmer.

14. Anordnung nach Anspruch 13, wobei das Multimedia-Dienstnetz (302) ein IMS-Netz unter Verwendung von SIP-Signalisierung ist und die Registrierungsaufforderung eine SIP-REGISTER-Nachricht ist.

15. Anordnung nach einem der Ansprüche 9-14, wobei das Multimedia-Dienstnetz (302) ein IMS-Netz ist, wobei die Anordnung in einer IMS-Kerneinheit (304) implementiert ist.

16. Anordnung nach einem der Ansprüche 9-15, wobei das Sendemittel dazu konfiguriert ist, die Standortanfrage an eine Standortabrufeinheit (306) in dem IP-Zugangsnetz (300) zu senden.

17. Verfahren, ausgeführt in einem IP-Zugangsnetz (300), zum Bereitstellen von Standortinformationen an ein Multimedia-Dienstnetz (302) für Teilnehmer, die mit dem IP-Zugangsnetz (300) verbunden sind, umfassend die folgenden Schritte:
- Empfangen einer Standortanfrage für einen Teilnehmer, die eine IP-Adresse enthält, die dem Teilnehmer gegenwärtig zugewiesen ist, und
- Abrufen von Standortinformationen für den Teilnehmer basierend auf der IP-Adresse, **dadurch gekennzeichnet, dass** die Standortinformationen den physischen Standort des Zugangspunkts in dem IP-Zugangsnetz (300) umfassen, an dem der Teilnehmer gegenwärtig unter Verwendung der IP-Adresse mit dem IP-Zugangsnetz (300) verbunden ist, und
- Bereitstellen der abgerufenen Standortinformationen für den Teilnehmer an das Multimedia-Dienstnetz (302) als Antwort auf die empfangene Standortanfrage.

18. Verfahren nach Anspruch 17, wobei die Standortabrufeinheit in dem IP-Zugangsnetz von einem IP-Adressenadministrator in dem IP-Zugangsnetzwerk eine Zugangspunktidentität abruft, die gegenwärtig mit der empfangenen IP-Adresse assoziiert ist.

19. Verfahren nach Anspruch 18, wobei die Standortabrufeinheit ferner die Standortinformationen basierend auf der abgerufenen Zugangspunktidentität von einer Standortdatenbank in dem IP-Zugangsnetz abruft.

20. Verfahren nach Anspruch 19, wobei die Standortinformationen zusammen mit der abgerufenen Zugangspunktidentität bereitgestellt werden.

21. Verfahren nach einem der Ansprüche 18-20, wobei die Zugangspunktidentität in Abhängigkeit von der Netzkonfiguration eine Schicht-2-Adresse wie etwa eine Ethernet-MAC-Adresse, ATM VPI/VCI oder sonstige relevante Netzadresse ist.

22. Verfahren nach einem der Ansprüche 17-21, wobei das Multimedia-Dienstnetz (302) ein IMS-Netz ist und die abgerufenen Standortinformationen an eine IMS-Kerneinheit (304) bereitgestellt werden.

23. Standortabrufeinheit (306) in einem IP-Zugangsnetz (300) zum Bereitstellen von Standortinformationen an ein Multimedia-Dienstnetz (302) für Teilnehmer, die mit dem IP-Zugangsnetz (300) verbunden sind, umfassend:
- Mittel zum Empfangen einer Standortanfrage für den Teilnehmer, die eine IP-Adresse enthält, die dem Teilnehmer zugewiesen ist, und
- Mittel zum Abrufen von Standortinformationen für den Teilnehmer basierend auf der IP-Adresse, **dadurch gekennzeichnet, dass** die Standortinformationen den physischen Standort des Zugangspunkts in dem IP-Zugangsnetz (300) umfassen, an dem der Teilnehmer gegenwärtig unter Verwendung der IP-Adresse mit dem IP-Zugangsnetz (300) verbunden ist, und
- Mittel zum Bereitstellen der abgerufenen Standortinformationen für den Teilnehmer an das Multimedia-Dienstnetz (302) als Antwort auf die empfangene Standortanfrage.

24. Standortabrufeinheit nach Anspruch 23, wobei das Abrufmittel dazu konfiguriert ist, von einem IP-Adressenadministrator in dem IP-Zugangsnetzwerk eine Zugangspunktidentität abzurufen, die gegenwärtig mit der empfangenen IP-Adresse assoziiert ist.

25. Standortabrufeinheit nach Anspruch 24, wobei das Abrufmittel ferner dazu konfiguriert ist, die Standortinformationen basierend auf der abgerufenen Zugangspunktidentität von einer Standortdatenbank in dem IP-Zugangsnetz abzurufen.

26. Standortabrufeinheit (306) nach Anspruch 24, wobei das Abrufmittel ferner dazu konfiguriert ist, die Standortinformationen zusammen mit der abgerufenen Zugangspunktidentität zu erlangen.

27. Standortabrufeinheit (306) nach einem der Ansprüche 24-26, wobei die Zugangspunktidentität in Abhängigkeit von der Netzkonfiguration eine Schicht-2-Adresse wie etwa eine Ethernet-MAC-Adresse, ATM VPI/VCI oder sonstige relevante Netzadresse ist.

28. Standortabrufeinheit (306) nach einem der Ansprüche 23-27, wobei das Multimedia-Dienstnetz (302) ein IMS-Netz ist und das Bereitstellungsmittel dazu konfiguriert ist, die abgerufenen Standortinformationen an eine IMS-Kerneinheit (304) bereitzustellen.

## Revendications

1. Procédé, exécuté dans un réseau de services multimédias (302), d'obtention d'informations de localisation pour des abonnés connectés à un réseau d'accès IP (300), comprenant les étapes suivantes :
- la réception d'une demande à partir d'un abonné, contenant une adresse IP actuellement attribuée à l'abonné,
- l'envoi d'une interrogation de localisation comprenant ladite adresse IP au réseau d'accès IP (300), et
- la réception d'informations de localisation pour l'abonné en réponse à l'interrogation de localisation, **caractérisé en ce que** lesdites informations de localisation comprennent l'emplacement physique du point d'accès dans le réseau d'accès IP (300) auquel ledit abonné utilisant actuellement ladite adresse IP est connecté audit réseau d'accès IP (300), en permettant ainsi la fourniture des informations de localisation reçues en liaison avec un appel d'urgence provenant dudit abonné.

2. Procédé selon la revendication 1, dans lequel il est déterminé que la demande reçue concerne un appel d'urgence et les informations de localisation obtenues sont ajoutées à la demande avant de l'envoyer à un centre d'urgence.

3. Procédé selon la revendication 2, dans lequel ledit centre d'urgence est sélectionné pour la demande sur la base des informations de localisation obtenues.

4. Procédé selon la revendication 2 ou 3, dans lequel le réseau de services multimédias (302) est un réseau IMS utilisant une signalisation SIP et ladite demande concernant un appel d'urgence est un message SIP INVITE.

5. Procédé selon la revendication 1, dans lequel il est déterminé que la demande reçue est une demande d'enregistrement et les informations de localisation obtenues sont sauvegardées pour une récupération ultérieure dans le cas d'un appel d'urgence subséquent provenant dudit abonné.

6. Procédé selon la revendication 5, dans lequel le réseau de services multimédias (302) est un réseau IMS utilisant une signalisation SIP et ladite demande d'enregistrement est un message SIP REGISTER.

7. Procédé selon l'une quelconque des revendications 6, dans lequel le réseau de services multimédias (302) est un réseau IMS, le procédé étant exécuté dans une entité centrale IMS (304).

8. Procédé selon l'une quelconque des revendications 7, dans lequel l'interrogation de localisation est envoyée à une unité de récupération de localisation (306) dans le réseau d'accès IP (300).

9. Agencement dans un réseau de services multimédias (302), pour obtenir des informations de localisation pour des abonnés connectés à un réseau d'accès IP (300), comprenant :
- des moyens pour recevoir une demande à partir d'un abonné, contenant une adresse IP actuellement attribuée à l'abonné,
- des moyens pour envoyer une interrogation de localisation comprenant ladite adresse IP au réseau d'accès IP (300), et
- des moyens pour recevoir des informations de localisation pour l'abonné en réponse à l'interrogation de localisation, **caractérisé en ce que** lesdites informations de localisation comprennent l'emplacement physique du point d'accès dans le réseau d'accès IP (300) auquel ledit abonné utilisant actuellement ladite adresse IP est connecté audit réseau d'accès IP (300), en permettant ainsi la fourniture des informations de localisation reçues en liaison avec un appel d'urgence provenant dudit abonné.

10. Agencement selon la revendication 9, comprenant en outre des moyens logiques pour déterminer si la demande reçue concerne un appel d'urgence et des moyens pour ajouter les informations de localisation obtenues à la demande avant de l'envoyer à un centre d'urgence.

11. Agencement selon la revendication 10, dans lequel les moyens logiques sont configurés pour sélectionner ledit centre d'urgence pour la demande sur la base des informations de localisation obtenues.

12. Agencement selon la revendication 10 ou 11, dans lequel le réseau de services multimédias (302) est un réseau IMS utilisant une signalisation SIP et ladite demande concernant un appel d'urgence est un message SIP INVITE.

13. Agencement selon la revendication 9, comprenant en outre des moyens logiques pour déterminer si la demande reçue est une demande d'enregistrement et des moyens pour stocker les informations de localisation obtenues pour une récupération ultérieure dans le cas d'un appel d'urgence subséquent provenant dudit abonné.

14. Agencement selon la revendication 13, dans lequel le réseau de services multimédias (302) est un réseau IMS utilisant une signalisation SIP et ladite demande d'enregistrement est un message SIP REGISTER.

15. Agencement selon l'une quelconque des revendications 9 à 14, dans lequel le réseau de services multimédias (302) est un réseau IMS, l'agencement étant mis en oeuvre dans une entité centrale IMS (304).

16. Agencement selon l'une quelconque des revendications 9 à 15, dans lequel lesdits moyens d'envoi sont configurés pour envoyer l'interrogation de localisation est envoyée à une unité de récupération de localisation (306) dans le réseau d'accès IP (300).

17. Procédé, exécuté dans un réseau d'accès IP (300), de fourniture d'informations de localisation à un réseau de services multimédias (302) pour des abonnés connectés audit réseau d'accès IP (300), comprenant les étapes suivantes :
- la réception d'une interrogation de localisation pour un abonné, contenant une adresse IP actuellement attribuée à l'abonné, et
- la récupération d'informations de localisation pour l'abonné sur la base de ladite adresse IP, **caractérisé en ce que** lesdites informations de localisation comprennent l'emplacement physique du point d'accès dans le réseau d'accès IP (300) auquel ledit abonné utilisant actuellement ladite adresse IP est connecté audit réseau d'accès IP (300), et
- la fourniture des informations de localisation récupérées pour l'abonné audit réseau de services multimédias (302) en réponse à l'interrogation de localisation reçue.

18. Procédé selon la revendication 17, dans lequel une unité de récupération de localisation dans le réseau d'accès IP récupère une identité de point d'accès actuellement associée à l'adresse IP reçue, à partir d'un administrateur d'adresses IP dans le réseau d'accès IP.

19. Procédé selon la revendication 18, dans lequel l'unité de récupération de localisation récupère en outre lesdites informations de localisation sur la base de l'identité de point d'accès récupérée, à partir d'une base de données de localisation dans le réseau d'accès IP.

20. Procédé selon la revendication 19, dans lequel lesdites informations de localisation sont fournies conjointement à l'identité de point d'accès récupérée.

21. Procédé selon l'une quelconque des revendications 18 à 20, dans lequel l'identité de point d'accès est une adresse de couche 2, telle qu'une adresse MAC Ethernet, ATM VPI/VCI ou autre adresse réseau pertinente, en fonction de la configuration de réseau.

22. Procédé selon l'une quelconque des revendications 17 à 21, dans lequel le réseau de services multimédias (302) est un réseau IMS et les informations de localisation récupérées sont fournies à une entité centrale IMS (304).

23. Unité de récupération de localisation (306) dans un réseau d'accès IP (300), pour fournir des informations de localisation à un réseau de services multimédias (302) pour des abonnés connectés audit réseau d'accès IP (300), comprenant :
- des moyens pour recevoir une interrogation de localisation pour ledit abonné, contenant une adresse IP attribuée à l'abonné, et
- des moyens pour récupérer des informations de localisation pour l'abonné sur la base de ladite adresse IP, **caractérisé en ce que** lesdites informations de localisation comprennent l'emplacement physique du point d'accès dans le réseau d'accès IP (300) auquel ledit abonné utilisant actuellement ladite adresse IP est connecté audit réseau d'accès IP (300), et
- des moyens pour fournir les informations de localisation récupérées pour l'abonné audit réseau de services multimédias (302) en réponse à l'interrogation de localisation reçue.

24. Unité de récupération de localisation selon la revendication 23, dans laquelle les moyens de récupération sont configurés pour récupérer une identité de point d'accès actuellement associée à l'adresse IP reçue, à partir d'un administrateur d'adresses IP dans le réseau d'accès IP.

25. Unité de récupération de localisation selon la revendication 24, dans laquelle les moyens de récupération sont configurés en outre pour récupérer lesdites informations de localisation sur la base de l'identité de point d'accès récupérée, à partir d'une base de données de localisation dans le réseau d'accès IP.

26. Unité de récupération de localisation (306) selon la revendication 24, dans laquelle les moyens de récupération sont configurés en outre pour obtenir lesdites informations de localisation conjointement à l'identité de point d'accès récupérée.

27. Unité de récupération de localisation (306) selon l'une quelconque des revendications 24 à 26, dans laquelle l'identité de point d'accès est une adresse de couche 2, telle qu'une adresse MAC Ethernet, ATM VPI/VCI ou autre adresse réseau pertinente, en fonction de la configuration de réseau.

28. Unité de récupération de localisation (306) selon l'une quelconque des revendications 23 à 27, dans laquelle le réseau de services multimédias (302) est un réseau IMS et les moyens de fourniture sont configurés pour fournir les informations de localisation récupérées à une entité centrale IMS (304).
